(19) Europäisches Patentamt / European Patent Office / Office européen des brevets

(11) **EP 2 680 358 B1**

(12) **EUROPEAN PATENT SPECIFICATION**

(45) Date of publication and mention
of the grant of the patent:
**21.02.2018 Bulletin 2018/08**

(51) Int Cl.:
*H01M 8/1226* *(2016.01)*        *H01M 8/0252* *(2016.01)*
*H01M 8/1246* *(2016.01)*        *H01M 8/1253* *(2016.01)*
*H01M 8/124* *(2016.01)*

(21) Application number: **13173657.1**

(22) Date of filing: **25.06.2013**

(54) **Fuel cell**

Brennstoffzelle

Pile à combustible

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.06.2012 JP 2012144607**
            **11.10.2012 JP 2012226235**

(43) Date of publication of application:
**01.01.2014 Bulletin 2014/01**

(73) Proprietor: **NGK Insulators, Ltd.
Nagoya-shi, Aichi 467-8530 (JP)**

(72) Inventors:
• **Ohmori, Makoto
Nagoya-shi, Aichi 467-8530 (JP)**

• **Ryu, Takashi
Nagoya-shi, Aichi 467-8530 (JP)**
• **Okamoto, Taku
Nagoya-shi, Aichi 467-8530 (JP)**

(74) Representative: **Naylor, Matthew John et al
Mewburn Ellis LLP
City Tower
40 Basinghall Street
London EC2V 5DE (GB)**

(56) References cited:
**EP-A1- 1 995 225        JP-A- 2007 250 325
US-A1- 2012 107 716**

## Description

Technical Field

The present invention relates to a solid oxide fuel cell.

Description of the Related Art

In recent years, fuel cells have attracted attention due to efficient use of energy resources and environmental problems.

A planar type fuel cell including a flow channel in an inner portion generally has a porous anode, a solid electrolyte layer and a cathode sequentially formed on a first principal surface of the anode, and a dense interconnector formed on a second principal surface of the anode (see Patent Literature 1, for example).

For the purpose of enhancing the conductive properties between the anode and the interconnector, a method has been proposed of provision of an intermediate layer between the interconnector and the anode (see Patent Literature 2, for example).

EP-A-1995225 discloses a conductive sintered body for use in a fuel cell, the conductive sintered body being based on lanthanum chromite perovskite oxide and a second composite oxide phase containing Mg and Ni.

US 2012/0107716 discloses a solid oxide fuel cell with power generating elements. An interconnector electrically connects the power generating elements and contains a chromite-based material.

JP-A-2007-250325 discloses a solid oxide fuel cell in which a solid electrolyte layer is formed on a conductive supporter formed from a porous body. The conductive supporter includes a Ni phase and an inorganic aggregate phase.

Citation List

Patent Literature

[Patent Literature 1] Japanese Patent Application Laid-Open No. 2007-200761
[Patent Literature 2] Japanese Patent Application Laid-Open No. 2004-253376

Summary of Invention

Technical Problem

However, the fuel cell according to Patent Literature 1 may cause delamination in the interface between the anode and the interconnector during reduction treatment. Furthermore, the fuel cell according to Patent Literature 2 may cause delamination in the interface between the intermediate layer and the interconnector during reduction treatment.

The above effect results from the fact that the expansion amount during reduction of the interconnector as a dense body is greater than the reduction expansion amount of the intermediate layer or the anode as a porous body.

The present invention is proposed in light of the above circumstances, and has the object of providing a fuel cell in which delamination between a porous body and an interconnector can be suppressed.

Solution to Problem

A fuel cell according to the present invention is as set out in claim 1.

Advantageous Effects of Invention

The present invention provides a fuel cell in which delamination between a porous body and an interconnector can be suppressed.

BRIEF DESCRIPTION OF THE DRAWINGS

FIG. 1 is a cross sectional view illustrating the configuration of a fuel cell.

FIG. 2 is a schematic view of a cross sectional surface of an interface between a support substrate and an interconnector.

FIG. 3 is a three-component composition diagram illustrating a volume ratio of Ni particles, ceramic particles and pores at a contacting region with the support substrate.

FIG. 4 illustrates a calculation method for the volume ratio.

FIG. 5 is a cross sectional view of the configuration of a voltage evaluation apparatus used in conduction testing.

FIG. 6 is a three-component composition diagram illustrating the volume ratio of Ni particles, ceramic particles and pores in Samples No. 1 to No. 22.

FIG. 7 illustrates a Sebastian test.

DETAILED DESCRIPTION OF THE PREFERRED EMBODIMENTS

An embodiment of the present invention will be described below making reference to the figures. Those aspects of configuration in the following description of the figures that are the same or similar are denoted by the same or similar reference numerals. However, the figures are merely illustrative, and the actual ratios or the like of the respective dimensions may differ. Therefore, the specific dimensions or the like should be determined by making reference to the following description. Alternatively, it is naturally the case that portions are included that exhibit a different ratio or relationship between dimensions in the respective figures.

In the following embodiments, a solid oxide fuel cell (SOFC) will be described as an example of a fuel cell. Although a flat-tubular type fuel cell is described below, the present invention is not limited in this regard, and may be applied to a so-called segmented-in-series fuel cell.

Configuration of Fuel Cell 100

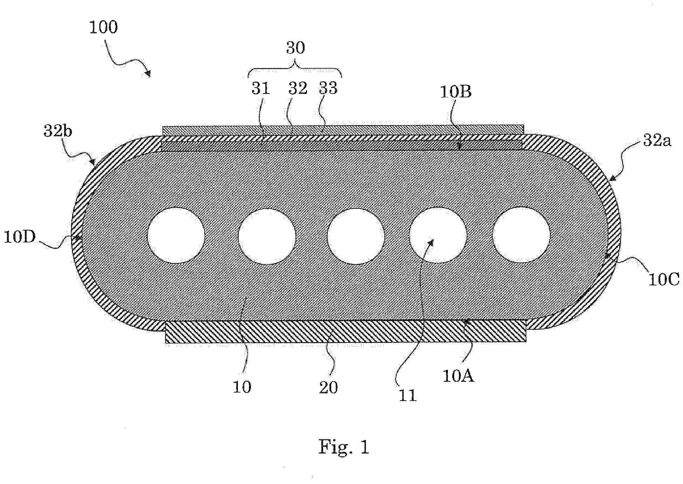

The configuration of a fuel cell (abbreviated below to "cell") 100 will be described making reference to the figures. FIG. 1 is a cross sectional view of the configuration of the fuel cell 100.

The cell 100 is a flat tabular body configured using a ceramic material. The thickness of the cell 1 00 is for example 1 mm to 10 mm, with a width of 10 mm to 100 mm, and a length of 50 mm to 500 mm. A cell stack configuring a fuel cell battery may be formed by connecting a plurality of cells 100 in series.

As illustrated in FIG. 1, the cell 100 includes a support substrate 10, an interconnector 20 and a power-generating section 30.

Support substrate 10

The support substrate 10 is a tabular body that exhibits a flat cross sectional view. The support substrate 10 for example has a thickness of, for example, 1 mm to 10 mm.

The support substrate 10 exhibits conductive properties configured to transmit a current generated by the power-generating section 30 to the interconnector, and gas permeable properties configured to allow permeation of fuel gas to the power-generating section. An inner portion of the support substrate 10 as illustrated in FIG. 1 includes formation of a plurality of gas flow channels 11 for passage of fuel gas.

The support substrate 10 includes a first flat surface 10A, a second flat surface 10B, a first curved side surface 10C and a second curved side surface 10D. The first flat surface 10A is located on opposite side of the second flat surface 10B, and the first curved side surface 10C is located on opposite side of the second curved side surface 10D. The first flat surface 10A, the second flat surface 10B, the first curved side surface 10C and the second curved side surface 10D are mutually connected to thereby configure the outer peripheral surface of the support substrate 10.

The support substrate 10 includes nickel (Ni) particles, ceramic particles and pores. The support substrate 10 may also contain Ni particles in the form of nickel oxide (NiO) particles. In the present embodiment, the support substrate 10 functions as a current collecting layer. The support substrate 10 is an example of a "porous body".

The examples of the ceramic particles include yttria-stabilized zirconia (YSZ), calciastabilized zirconia (CSZ), rare earth oxides, and perovskite oxides, or the like. However, yttria ($Y_2O_3$), gadolinium doped ceria (GDC), a chromite-based material such as lanthanum chromite ($LaCrO_3$), or a titanite-based material such as $SrTiO_3$ are particularly preferred. The ceramic particles may exhibit conductive properties, or may not exhibit conductive properties.

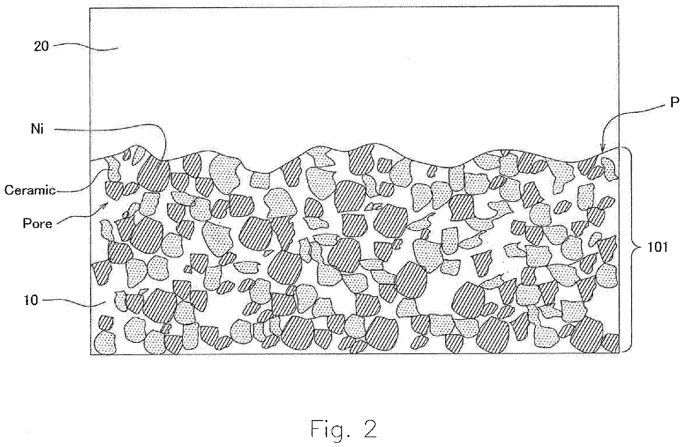

The microstructure of the support substrate 10 will be described below making particular reference to the contacting region 101 (reference is made to FIG. 2) which is contacted with the interconnector 20.

Interconnector 20

The interconnector 20 is disposed on the first flat surface 10A of the support substrate 10. The interconnector 20 is electrically connected to the support substrate 10. The interconnector 20 is cofired with the support substrate 10. The interconnector 20 is denser than the support substrate 10. Therefore, the porosity in the interconnector 20 is lower than the porosity of the support substrate 10. The interconnector 20 collects the current produced in the power generating unit 30through the support substrate 10. The interconnector 20 has a thickness for example of about 10 microns to 100 microns.

The interconnector 20 is configured with a dense ceramic, for example by a lanthanum-chromite-based perovskite oxide. The lanthanum-chromite-based perovskite oxide includes a material such as $La(CrMg)O_3$, $(LaCa)CrO_3$ or $(LaSr)CrO_3$ in which Mg, Ca, Sr or the like are in a substituted solid solution.

Power-generating section 30

The power-generating section 30 is disposed on the second flat surface 10B of the support substrate 10. Therefore, the power-generating section 30 is disposed on the opposite side to the interconnector 20 through the support substrate 10. The power-generating section 30 is configured from an anode active layer 31, a solid electrolyte layer 32, and a cathode 33.

The anode active layer 31 is formed on the second flat surface 10B of the support substrate 10. The anode active layer 31 is configured with $ZrO_2$ (stabilized zirconia) containing a solid solution of rare earth elements, and Ni and/or NiO. The configuration of $ZrO_2$ containing a solid solution of rare earth elements preferably includes yttria-stabilized zirconia (3YSZ, 8YSZ, 10YSZ, or the like).

The solid electrolyte layer 32 is disposed between the anode active layer 31 and the cathode 33. The solid electrolyte layer 32 includes a first seal portion 32a and a second seal portion 32b that extend from on the anode active layer 31 to the support substrate 10. The solid electrolyte layer 32 for example has a thickness of approximately 3 microns to 50 microns.

The solid electrolyte layer 32 includes zirconium (Zr). The solid electrolyte layer 32 may include zirconium in the form of zirconia ($ZrO_2$), and may include zirconia as a main component. The material used in the solid electrolyte layer 12 includes zirconia-based materials such as ScSZ or yttria-stabilized zirconia like 3YSZ, 8YSZ, and 10YSZ or ScSZ.

The cathode 33 is disposed on the solid electrolyte layer 32. The cathode 33 has a thickness for example of 10 microns to 100 microns. The cathode 33 is configured with a conductive ceramic such as a perovskite oxide expressed by the general formula $ABO_3$. The perovskite oxide includes transition metal perovskite oxides, and in particular, use is preferred of $LaCoO_3$ oxides, $LaFeO_3$ oxides, or $LaMnO_3$ oxides including La at the A site, or the like. A barrier layer may be interposed between the cathode 33 and the electrolyte to prevent reactions between those two components. The material used in the barrier layer preferably includes ceria doped with Gd or Sm.

Microstructure of the Support substrate 10

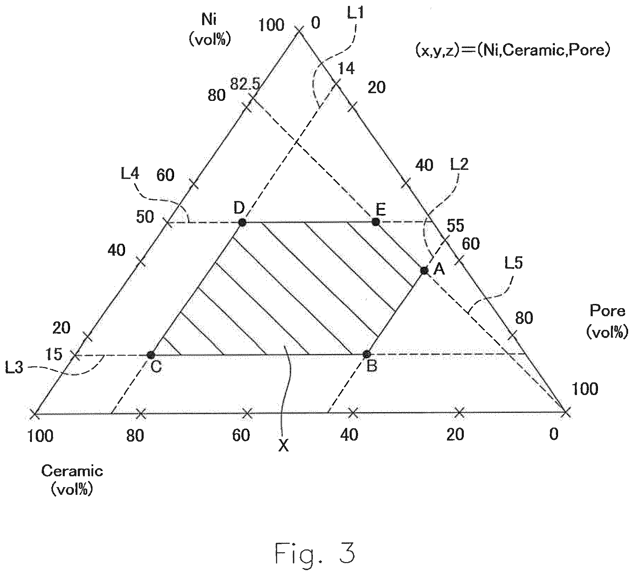

Next, the microstructure of the support substrate 10 as the porous body will be described making reference to the figures. FIG. 2 is a schematic view of a cross sectional surface of the interface between a support substrate 10 and the interconnector 20. FIG. 3 is a three-component composition diagram illustrating the volume ratio of pores, ceramic particles and Ni particles in the contacting region 101 of the support substrate 10. However, the volume ratio of the respective components in FIG. 3 is illustrated relative to the total volume of the Ni particles, the ceramic particles and the pores (hereinafter abbreviated to "total volume"). In the present embodiment, a reference to the volume ratio of the respective components will be taken to mean when the base support plate 10 is exposed to a reducing atmosphere.

As illustrated in FIG. 2, the support substrate 10 includes a contacting region 101 contacted with the interconnector 20. The contacting region 101 includes Ni particles, ceramic particles, and pores. At the interface P, the respective Ni particles, ceramic particles, and pores are contacted with the interconnector 20. The interface P can be defined as the line of the interconnector 20 closest to the support substrate 10. The interface P can be distinguished by observation using a scanning electron microscope (SEM).

The interface P may be discriminated as the boundary that is detected as the principal component included in the interconnector 20, for example, by using a wavelength dispersive X-ray spectrometry apparatus (WDS), or an energy dispersive X-ray spectrometry apparatus (EDS), or the like. Although the contacting region 101 is defined as the region within a predetermined distance (for example, no more than 5 microns) from the interface P, a least square line that passes through the interface P may be used in substitution for the interface P.

As illustrated in FIG. 3, when the support substrate 10 is exposed to a reducing atmosphere, if the points at which the Ni particles exhibit x volume%, the ceramic particles exhibit y volume%, the pores exhibit z volume% are taken to be (x,y,z), the respective volume ratios of the Ni particles, the ceramic particles and the pores to the total volume are positioned in a region X defined by a pentagon having apexes of point A (37.1, 7.9, 55.0), point B (15.0, 30.0, 55.0), point C (15.0, 71.0, 14.0), point D (50.0, 36.0, 14.0), and point E (50.0, 10.6, 39.4).

The region X is defined as the region enclosed by the first to fifth lines L1 to L5. The first line L1 is the line on which the volume ratio of the pores to the total volume is 14 volume%. The second line L2 is the line on which the volume ratio of the pores to the total volume is 55 volume%. The third line L3 is the line on which the volume ratio of the Ni particles to the total volume is 15 volume%. The fourth line L4 is the line on which the volume ratio of the Ni particles to the total volume is 50 volume%. The fifth line L5 is the line on which the volume ratio of the Ni particles to the sum volume of the volume of the ceramic particles and the volume of the Ni particles is 82.5 volume%.

Therefore, when the support substrate 10 is exposed to a reducing atmosphere, the region X is defined as the region that satisfies the following three conditions.

Condition (1): The volume ratio of the pores to the total volume is greater than or equal to 14 volume % and less than or equal to 55 volume%.

Condition (2): The volume ratio of the Ni particles to the total volume is greater than or equal to 15 volume % and less than or equal to 50 volume%.

Condition (3): The volume ratio of the Ni particles to the sum volume of the volume of the ceramic particles and the volume of the Ni particles is less than or equal to 82.5 volume%.

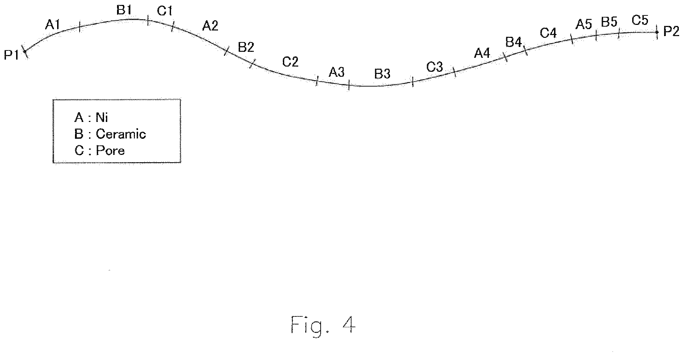

In this regard, the method of calculation of the volume ratio of the respective components to the total volume will be described. FIG. 4 illustrates a calculation method for the volume ratio, and is a schematic view that expands a portion of the interface P (PI to P2). The interval P1 and P2 is for example of the order of 30 microns to 300 microns.

In FIG. 4, A1 to A5 illustrates the contacting range of the Ni particles to the interconnector 20, B1 to B5 illustrates the contacting range of the ceramic particles to the interconnector 20, and C1 to C5 illustrates the contacting range of the pores to the interconnector 20. In this configuration, the volume ratio of the respective components to the total volume is estimated using Formulae (1) to (3) below, wherein W denotes the sum of Al-A5, B1 - B5, and C1 - C5 in Formulae (1) to (3).

$$\text{Ni particles (volume\%)} = (A1 + A2 + A3 + A4 + A5) \times 100/W \qquad …(1)$$

$$\text{Ceramic particles (volume\%)} = (B1 + B2 + B3 + B4 + B5) \times 100/W \quad …(2)$$

$$\text{Pores (volume\%)} = (C1 + C2 + C3 + C4 + C5) \times 100/W \qquad …(3)$$

The volume ratio of Ni particles to the sum volume of the volume of the ceramic particles and the volume of the Ni particles is calculated by dividing the value of Formula (1) by the sum of the value of Formula (1) and the value of Formula (2).

The method of estimating a three dimensional structure from a two dimensional composition is disclosed in "Ceramic Processing", Nobuyasu Mizutani, Yoshiharu Ozaki, Toshio Kimura, and Takashi Yamaguchi, Gihodo Shuppan Co., Ltd, March 25, 1985, page 190 to page 201.

The average value of the contacting length of the Ni particles to the interconnector 20 (in FIG. 4, (A1 + A2 + A3 + A4 + A5)/5) is preferably greater than or equal to 0.51 microns and less than or equal to 3.1 microns. In the same manner, the average value of the contacting length of the ceramic particles to the interconnector 20 (in FIG. 4, (B1 + B2 + B3 + B4 + B5)/5) is preferably greater than or equal to 0.49 microns and less than or equal to 3.2 microns.

When the average value of the contacting length respectively of the Ni particles and the ceramic particles is calculated, it is preferred to omit extremely small values for the contacting length. There is due to the fact that there is a possibility that no enhancement of the tensile strength will be exhibited at contacting positions at which the contacting length is extremely small. More specifically, the average value of the contacting length respectively of the Ni particles and the ceramic particles is preferably calculated by omitting contacting positions at which the contacting length is less than 0.08 microns.

Method of Manufacturing Fuel Cell 100

The method of manufacturing the fuel cell 1 00 will be described below.

Firstly, an NiO powder and $Y_2O_2$ powder are mixed, and then a pore-forming agent (for example, cellulose, or PMMA particles having an average particle diameter of 0.5 microns to 20 microns), an organic binder, and water are mixed into the powder mixture to thereby form a raw material for the support substrate.

The raw material for the support substrate is extrusion molded, dried and calcined to thereby prepare a support substrate calcined body.

Next, a slurry obtained by mixing an organic binder and a powder of $ZrO_2$ (for example, 8YSZ, or the like) which

includes addition of $Y_2O_3$ is subjected to a doctor blade method to thereby prepare a green sheet for the solid electrolyte layer.

Then, a paste is prepared by mixing an organic binder and a solvent with a powder of $ZrO_2$ (for example, 8YSZ) including a solid solution of $Y_2O_3$, and is coated and dried using a screen printing method onto a portion of the green sheet for the solid electrolyte layer to thereby form a coating layer for the anode layer.

Next, a stacked body is prepared by adhering the green sheet for the solid electrolyte layer with the coating layer for the anode layer onto the support substrate calcined body.

Then, the stacked body is calcined at a predetermined temperature (for example of approximately, 1000 degrees C).

A paste formed by mixing an $LaCrO_3$-based oxide and an organic binder in a solvent is coated by printing onto an exposed portion of the support substrate green body, and fired at a predetermined temperature (1450 degrees C).

Next, a slurry obtained by adding LSCF powder and a binder is printed and dried on the solid electrolyte layer, and then baked at a predetermined temperature (for example, 1150 degrees C).

Operation and Effect

When the support substrate 10 is exposed to a reducing atmosphere, the contacting region 101 of the support substrate 10 (that is an example of a porous body) according to the present embodiment exhibits a volume ratio of pores to the total volume that includes the Ni particles, the ceramic particles and the pores of at least 14 volume% to no more than 55 volume%.

In this manner, the Young's modulus in proximity to the interface P of the support substrate 10 can be reduced by a configuration in which the volume ratio of the pores is greater than or equal to 14 volume%. As a result, the stress produced in proximity to the interface P in response to expansion of the interconnector 20 during reducing operations can be reduced. A sufficient contacting width can be maintained between the Ni particles and the ceramic particles and the interconnector 20 since the volume ratio of the pores is less than or equal to 55 volume%. Therefore, since both mitigation of stress and maintenance of the contacting strength can be maintained, it is possible to suppress delamination between the support substrate 10 and the interconnector 20.

When the support substrate 10 is exposed to a reducing atmosphere, the volume ratio of Ni particles to the total volume that includes the Ni particles, the ceramic particles and the pores is greater than or equal to 15 volume% and less than or equal to 50 volume% in the contacting region 101.

In this manner, an increase in the electrical resistance at the contacting interface can be suppressed by ensuring numerous contacting positions between Ni particles by reason of a volume ratio of Ni particles of at least 15 volume%. Furthermore, the tendency of the electrical path to disconnect due to aggregation of Ni particles in a power generation atmosphere can be suppressed. In addition, excessive aggregation of Ni particles during reduction treatment can be suppressed by a configuration in which the volume ratio of Ni particles is less than or equal to 50 volume%.

When the support substrate 10 is exposed to a reducing atmosphere, the volume ratio of Ni particles to the sum volume of the volume of the Ni particles and the volume of the ceramic particles is less than or equal to 82.5 volume% in the contacting region 101.

Other Embodiments

However, the present invention is not limited to an embodiment as described above, and various modifications and changes are possible within the scope of the claims.

(A) Although the present embodiment has described a support substrate 10 as an example of a porous body that is contacted with an interconnector 20, there is no limitation in this regard. The interconnector 20 may be contacted with an intermediate layer that is inserted between the support substrate 10 and the interconnector 20. In this configuration, the intermediate layer and/or the support substrate 10 may be configured as a porous body. The conductivity of the intermediate layer is preferably higher than the conductivity of the support substrate 10 that functions as the anode current collecting layer.

(B) Although there is no particular disclosure in the present embodiment, the shape of the cell 100 may be applied to various configurations such as anode-supporting, flat, cylindrical, horizontally-striped configurations or the like. Furthermore, the cross sectional surface of the cell 1 00 may be oval or the like.

A segmented-in-series fuel cell includes provision of an insulated support substrate, a first and second power-generating section disposed on the support substrate, and a dense interconnector that is electrically connected to the first and the second power-generating sections. The insulated support substrate exhibits a porous configuration, includes an internal flow channel for the passage of fuel gas, and is formed as a flat plate. The power-generating section includes a conductive anode current collection layer, an anode active layer, a solid electrolyte layer, and a cathode. The anode current collection layer is formed on the support substrate. The anode active layer is formed on the anode current collection layer. The solid electrolyte layer is disposed between the anode active layer and the cathode. The interconnector is electrically connected to the anode current collection layer of the first power-generating section and the cathode of the second power-generating section. A portion of the interconnector is contacted with the surface of the anode current collection layer and surface of the support substrate.

The anode current collection layer in this type of segmented-in-series fuel cell may be an example of the "porous body". That is to say, delamination between the anode current collection layer, that is the porous body, and the interconnector can be suppressed by a configuration in which the volume ratio of the pores to the total volume of the Ni particles, the ceramic particles and the pores in the anode current collection layer that includes the Ni particles, the ceramic particles and the pores is greater than or equal to 14 volume% and less than or equal to 55 volume%, the volume ratio of the Ni particles to the total volume is greater than or equal to 15 volume% and less than or equal to 50 volume%, and the volume ratio of the Ni particles to the sum volume of the volume of the ceramic particles and the volume of the Ni particles is less than or equal to 82.5 volume%. In this configuration, Ni may be included or Ni may not be included in the support substrate that supports the power-generating section.

Furthermore, the support substrate in this type of segmented-in-series fuel cell may be an example of the "porous body". That is to say, delamination between the support substrate, that is the porous body, and the interconnector can be suppressed by a configuration in which the volume ratio of the pores to the total volume of the Ni particles, the ceramic particles and the pores in the support substrate that includes the Ni particles, the ceramic particles and the pores is greater than or equal to 14 volume% and less than or equal to 55 volume%, the volume ratio of the Ni particles to the total volume is greater than or equal to 15 volume% and less than or equal to 50 volume%, and the volume ratio of the Ni particles to the sum volume of the volume of the ceramic particles and the volume of the Ni particles is less than or equal to 82.5 volume%. In this configuration, Ni may be included or Ni may not be included in the support substrate that supports the power-generating section.

(C) In the present embodiment, although the support substrate 10 has a configuration that includes first and second curved side surfaces 10C, 10D, the shape of the side surface of the support substrate 10 is not limited thereby.

(D) In the present embodiment, although the first seal portion 32a and the second seal portion 32b are configured to cover the first curved side surface 10C and the second curved side surface 10D of the support substrate 10, the side of the "anode" may be covered.

(E) In the present embodiment, although the first seal portion 32a and the second seal portion 32b are configured by a solid electrolyte layer 32 that extends on the support substrate 10, the solid electrolyte layer 32 may be formed as another member.

Examples

Although the examples of a cell according to the present invention will be described below, the present invention is not limited to the following examples.

Manufacture of Samples No. 1 to No. 22

In the following description, Samples No. 1 to No. 22 are prepared to have a configuration including an NiO-$Y_2O_3$ plate (support substrate) and interconnector.

Firstly, PMMA as a pore forming agent was added to a powder formed by mixing NiO powder and $Y_2O_3$ powder. In the Samples No. 1 to No. 22, the powder was mixed in a range of NiO powder (20 wt% to 90 wt%) and $Y_2O_3$ powder (10 wt% to 80 wt%). Thereafter, the pore forming agent was added in a range of 0 wt% to 30 wt% to the total weight of NiO and $Y_2O_3$.

Next, the powder including the pore forming agent was introduced into a mill containing pebbles, and was mixed for three hours with water and a dispersant to thereby prepare a slurry.

Then, after filtering of the slurry in a sieve having openings of 150 microns, polyvinyl alcohol (PVA) was added as a binder, and drying at 100 degrees C was performed in a drying apparatus. Thereafter, the dried powder was passed again through a sieve having openings of 150 microns to thereby prepare a granulated powder.

Then, NiO-$Y_2O_3$ pellets having a diameter of 30 mm and a thickness of 2.0 mm were prepared by uniaxial pressing of the granulated powder at surface pressure of 0.4 t/cm$^2$.

Next, the paste for screen printing was prepared by using a tri-roll mill to mix lanthanum chromite doped with calcium, polyvinyl butyral (PVB) as a binder, and terpineol as a solvent.

Next, the paste was screen printed onto the pellets to have a thickness after firing of 40 microns, and was fired for 5 hours at 1450 degrees C. In this manner, Samples No. 1 to No. 22 were prepared as a cofired body.

Conductivity Inspection after Reduction Treatment of Samples No. 1 to No. 22

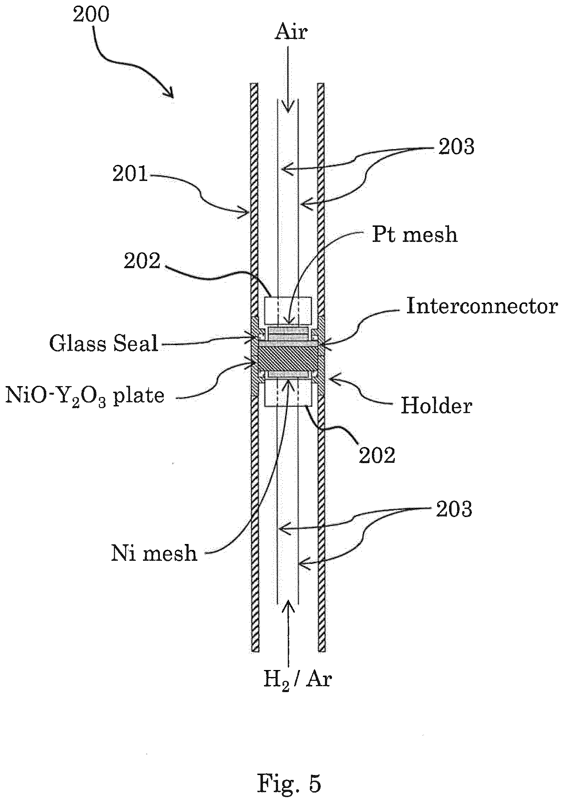

Samples No. 1 to No. 22 were placed in a voltage evaluation apparatus 200 as illustrated in FIG. 5 and the presence or absence of conductivity was confirmed after reduction treatment of the NiO. The voltage evaluation apparatus 200 included a capsule 201 that was divided into an upper portion and a lower portion. Pt pedestals 202 were respectively disposed in the upper portion and the lower portion of the capsule 201, and each of the Pt pedestals 202 was connected to two Pt lines 203 (potential line and current line).

The arrangement of Samples No. 1 to No. 22 was configured so that the interconnector is connected to the Pt pedestal 202 in the upper portion of the capsule 201, and the NiO-$Y_2O_3$ plate was connected to the Pt pedestal 202 in the lower portion of the capsule 201. The interval between the test piece and the capsule was sealed with molten glass so that gas does not mix between the upper portion and the lower portion of the capsule, and 35% H2/Ar gas flow was applied to the lower portion of the capsule and a flow of air was applied to the upper portion of the capsule.

After the NiO was sufficiently reduced, the presence or absence of conductivity was confirmed by measurement of the potential during flow of a constant current 1A on the Pt pedestal. The results are shown in Table 1.

Three-component Composition Diagram of Samples No. 1 to No. 22

As described below, the cutting plane observation of Samples No. 1 to No. 22 was performed to thereby analyze the microstructure of the NiO-$Y_2O_3$ plate in proximity to the interface of the NiO-$Y_2O_3$ plate and the interconnector.

Firstly, a resin was impregnated into the pores of the NiO-$Y_2O_3$ plate by drawing to create a vacuum while dripping an epoxy resin onto Samples No. 1 to No. 22 after reduction treatment. After curing the resin overnight, a cutting plane of the NiO-$Y_2O_3$ plate/interconnector was obtained by cutting each sample along the direction of thickness by use of a microcutter.

After the cutting plane was flatted with #600 water resistant paper, the cutting plane was smoothed with an ion milling apparatus (a cross section polisher manufactured by JEOL Ltd.).

Next, the cutting plane of each sample was observed using a high resolution FE-SEM that enables non-deposition observation at a low acceleration. When capturing an in-lens and out-lens image, three phases having different contrasts were observed. The three phases are the Ni particles, the ceramic particles and the pores. The length of contact of the three phases with the interconnector was measured to thereby calculate the respective ratios and estimate the volume ratio of the Ni particles, the ceramic particles and the pores in the contacting region.

Next, spot analysis using an energy dispersive X-ray spectrometry (EDS) apparatus was employed to clarify which of the regions that include the respective contrasts correspond to each of the Ni particles, the ceramic particles and the resin (that is to say, the pores). The closed pores that were not impregnated with resin were discriminated by visual inspection of a region(s) that is depressed from the smooth surface.

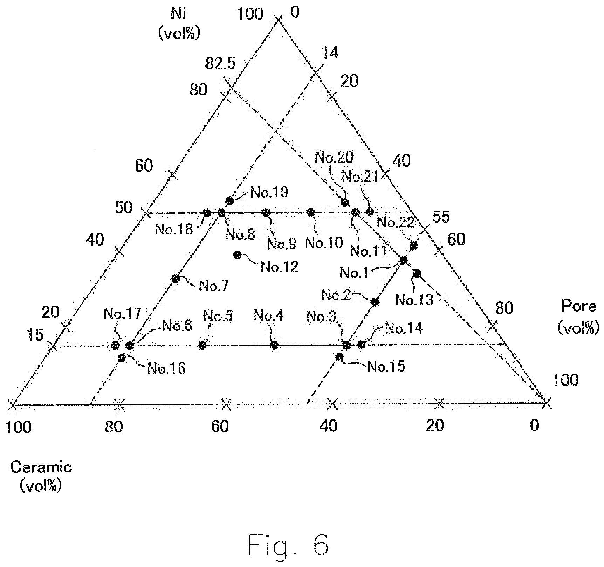

As illustrated in FIG. 6, a three-component composition diagram showing the volume ratio of the Ni particles, the ceramic particles and the pores in the respective contacting regions of Samples No. 1 to No. 22 was acquired.

Delamination Inspection after Reduction Treatment of Samples No. 1 to No. 22

As described below, the presence or absence of delamination at the interface between the interconnector and the NiO-$Y_2O_3$ plate was confirmed in relation to Samples No. 1 to No. 22. In the present embodiment, after a 10-hour exposure of Samples No. 1 to No. 22 to hydrogen at 800 degrees C, and after a 500-hour exposure, three positions on the cutting plane of each sample were observed at a 2000 magnification. The results for the presence or absence of delamination are shown in Table 1.

Table 1

| Sample No. | Ni (Vol%) | $Y_2O_3$ (Vol%) | Pores (Vol%) | Delamination After 10hr | Delamination After 500hr | Delamination after 500hr + 10 heat cycles | Conductivity | Evaluation |
|---|---|---|---|---|---|---|---|---|
| 1 | 37.1 | 7.9 | 55.0 | Not Delaminated | Not Delaminated | Not Delaminated | Conducted | ○ |
| 2 | 27.0 | 18.0 | 55.0 | Not Delaminated | Not Delaminated | Not Delaminated | Conducted | ○ |
| 3 | 15.0 | 30.0 | 55.0 | Not Delaminated | Not Delaminated | Not Delaminated | Conducted | ○ |
| 4 | 15.0 | 42.0 | 43.0 | Not Delaminated | Not Delaminated | Not Delaminated | Conducted | ○ |
| 5 | 15.0 | 57.0 | 28.0 | Not Delaminated | Not Delaminated | Not Delaminated | Conducted | ○ |
| 6 | 15.0 | 71.0 | 14.0 | Not Delaminated | Not Delaminated | Not Delaminated | Conducted | ○ |
| 7 | 33.0 | 53.0 | 14.0 | Not Delaminated | Not Delaminated | Not Delaminated | Conducted | ○ |
| 8 | 50.0 | 36.0 | 14.0 | Not Delaminated | Not Delaminated | Not Delaminated | Conducted | ○ |
| 9 | 50.0 | 28.0 | 22.0 | Not Delaminated | Not Delaminated | Not Delaminated | Conducted | ○ |
| 10 | 50.0 | 18.0 | 32.0 | Not Delaminated | Not Delaminated | Not Delaminated | Conducted | ○ |
| 11 | 50.0 | 10.6 | 39.4 | Not Delaminated | Not Delaminated | Not Delaminated | Conducted | ○ |
| 12 | 38.0 | 38.0 | 24.0 | Not Delaminated | Not Delaminated | Not Delaminated | Conducted | ○ |
| 13 | 35.5 | 7.5 | 57.0 | Not Delaminated | Not Delaminated | Delaminated | Not Conducted | X |
| 14 | 15.0 | 28.0 | 57.0 | Not Delaminated | Not Delaminated | Delaminated | Not Conducted | X |
| 15 | 13.0 | 32.0 | 55.0 | Not Delaminated | Delaminated | - | Not Conducted | X |
| 16 | 13.0 | 73.0 | 14.0 | Not Delaminated | Delaminated | - | Not Conducted | x |
| 17 | 15.0 | 73.0 | 12.0 | Delaminated | - | - | Not Conducted | X |
| 18 | 50.0 | 38.0 | 12.0 | Delaminated | - | - | Not Conducted | X |
| 19 | 52.0 | 34.0 | 14.0 | Not Delaminated | Delaminated | - | Not Conducted | X |
| 20 | 52.0 | 11.0 | 37.0 | Not Delaminated | Delaminated | - | Not Conducted | X |
| 21 | 50.0 | 8.6 | 41.4 | Not Delaminated | Delaminated | - | Not Conducted | X |
| 22 | 39.1 | 5.9 | 55.0 | Not Delaminated | Delaminated | - | Not Conducted | X |

As clearly shown by Table 1 and FIG. 6, good results are obtained in relation to conductivity inspection and delamination inspection in Samples No. 1 to No. 12. In the three-component composition diagram illustrated in FIG. 6, the volume ratio of Samples No. 1 to No. 12 form a pentagonal region that has apexes such that (Ni, $Y_2O_3$, pores) = (37.1, 7.9, 55.0), (15.0, 30.0, 55.0), (15.0, 71.0, 14.0), (50.0, 36.0, 14.0), and (50.0, 10.6, 39.4). Samples No. 13 to No. 22 that are outside the pentagon do not obtain good results in relation to conductivity inspection and delamination inspection. Therefore, it can be shown that adjustment to a volume ratio within the pentagonal region illustrated in FIG. 6 is preferred.

Preparation of Samples No. 23 to No. 39

Samples No. 23 to No. 39 were prepared in the same manner as the preparation method of Samples No. 1 to No. 22 as described above. However in Samples No. 23 to No. 39, the contacting length of each of the Ni particles and the $Y_2O_3$ particles with the interface as illustrated in FIG. 2 was adjusted by causing the raw material particle diameter of the Ni powder and the $Y_2O_3$ powder that configures the NiO-$Y_2O_3$ plate to diverge respectively into a range of 0.2 microns to 10 microns.

The average value of the contacting length of each of the Ni particles and the $Y_2O_3$ particles with the interface was calculated by observation of the cutting plane of Samples No. 23 to No. 39 using the same method as that described above. The calculation results are shown in Table 2.

Sebastian Testing of Samples No. 23 to No. 39

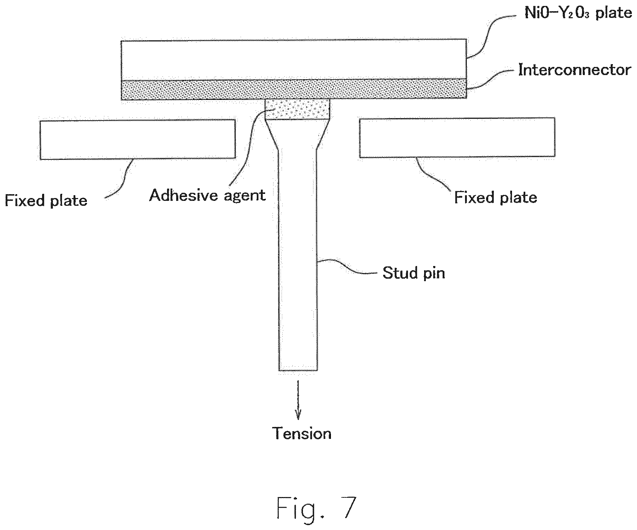

The contacting strength in Samples No. 23 to No. 39 between the NiO-$Y_2O_3$ plate and the interconnector was measured by delamination the NiO-$Y_2O_3$ plate from the interconnector using the apparatus illustrated in FIG. 7.

Firstly, after exposure of Samples No. 23 to No. 39 for 10 hours in hydrogen at 800 degrees C, the temperature is reduced while maintaining the reducing atmosphere to thereby avoid re-oxidization.

Next, as illustrated in FIG. 7, the tensile strength when delamination the NiO-$Y_2O_3$ plate from the interconnector and when pulling the stud pin attached to the interconnector by an adhesive was measured. The details of Sebastian testing were performed in accordance with the description in "Oyama Takeshi, "Adherence test using vertical pull instrument with stud pin" The Surface Finishing, vol. 58, page 292 (2007)".

The measurement results are shown in Table 2. Table 2 states the strength ratio as standardized with reference to the strength of Sample No. 31 that has the highest strength. In the present embodiment, the strength ratio is determined to be good when at least 0.9.

Table 2

| Sample No. | Ni (Vol%) | $Y_2O_3$ (Vol%) | Pores (Vol%) | Average Length of Ni Particles (microns) | Average Length of $Y_2O_3$ Particles (microns) | Strength Ratio |
|---|---|---|---|---|---|---|
| 23 | 38.3 | 38.1 | 23.6 | 0.31 | 0.20 | 0.65 |
| 24 | 38.1 | 37.9 | 24.0 | 0.15 | 0.21 | 0.62 |
| 25 | 38.2 | 37.9 | 23.9 | 5.1 | 0.22 | 0.59 |
| 26 | 37.9 | 38.1 | 24.0 | 0.51 | 0.50 | 0.93 |
| 27 | 37.8 | 38.2 | 24.0 | 1.5 | 0.51 | 0.97 |
| 28 | 37.9 | 38.0 | 24.1 | 3.1 | 0.49 | 0.95 |
| 29 | 37.9 | 38.1 | 24.0 | 0.31 | 1.5 | 0.62 |
| 30 | 38.0 | 38.0 | 24.0 | 0.52 | 1.4 | 0.96 |
| 31 | 38.1 | 38.0 | 23.9 | 1.6 | 1.5 | 1 |
| 32 | 38.0 | 38.3 | 23.7 | 3.1 | 1.6 | 0.97 |
| 33 | 38.3 | 38.2 | 23.5 | 5.1 | 1.5 | 0.59 |
| 34 | 37.9 | 37.8 | 24.3 | 0.51 | 3.1 | 0.98 |
| 35 | 37.9 | 38.0 | 24.1 | 1.6 | 3.0 | 0.97 |
| 36 | 37.8 | 37.9 | 24.3 | 3.1 | 3.2 | 0.96 |

(continued)

| Sample No. | Ni (Vol%) | $Y_2O_3$ (Vol%) | Pores (Vol%) | Average Length of Ni Particles (microns) | Average Length of $Y_2O_3$ Particles (microns) | Strength Ratio |
|---|---|---|---|---|---|---|
| 37 | 38.1 | 38.2 | 23.7 | 0.31 | 5.1 | 0.62 |
| 38 | 38.2 | 38.1 | 23.7 | 1.5 | 4.9 | 0.68 |
| 39 | 38.3 | 38.2 | 23.5 | 5.1 | 5.2 | 0.7 |

As illustrated in Table 2, the average contacting length of the Ni particles is shown to be preferably greater than or equal to 0.51 microns and less than or equal to 3.1 microns. Furthermore, the average contacting length of $Y_2O_3$ is shown to be preferably greater than or equal to 0.49 microns and less than or equal to 3.2 microns. The respective average contacting lengths of the Ni particles and $Y_2O_3$ is calculated by eliminating contacting positions at which the contacting length is less than 0.08 microns.

Reference Signs List

100    FUEL CELL
10    SUPPORT SUBSTRATE
101    CONTACTING REGION
20    INTERCONNECTOR
30    POWER-GENERATING SECTION
31    ANODE
32    SOLID ELECTROLYTE LAYER
33    CATHODE

**Claims**

1.    A fuel cell (100) comprising:

a porous body (10) including Ni particles, ceramic particles and pores;
an anode active layer (31) formed on the porous body (10);
a cathode (33);
a solid electrolyte layer (32) disposed between the anode active layer (31) and the cathode (33);
a dense interconnector (20) formed on the porous body (10), and electrically connected with the anode active layer (31);
the porous body (10) and the interconnector (20) cofired,
the porous body (10) including a contacting region (101) adjacent an a interface (P) with the interconnector (20), the contacting region connected to the interconnector,
**characterized in that**

when the porous body (10) is exposed to a reducing atmosphere, a volume ratio of the pores to a total volume of the Ni particles, the ceramic particles and the pores being greater than or equal to 14 volume% and less than or equal to 55 volume% in the contacting region, a volume ratio of the Ni particles to the total volume being greater than or equal to 15 volume% and less than or equal to 50 volume% in the contacting region, and a volume ratio of the Ni particles to a sum volume of a volume of the ceramic particles and a volume of the Ni particles being less than or equal to 82.5 volume% in the contacting region, the volume ratio of the pores to the total volume, the volume ratio of the Ni particles to the total volume and the volume ratio of the Ni particles to the sum volume being calculated based on contacting length of each of the Ni particles, the ceramic particles and the pores with the interconnector (20) in the interface (P) between the porous body (10) and the interconnector (20).

2.    The fuel cell according to claim 1, wherein
when the porous body is exposed to a reducing atmosphere, an average contacting length of the Ni particles with the interconnector (20) is greater than or equal to 0.51 microns and less than or equal to 3.1 microns.

**3.** The fuel cell according to claim 1 or claim 2, wherein
when the porous body (10) is exposed to a reducing atmosphere, an average contacting length of the ceramic particles with the interconnector (20) is greater than or equal to 0.49 microns and less than or equal to 3.2 microns.

**4.** The fuel cell according to any one of claim 1 to claim 3, wherein
the interconnector (20) is configured by a lanthanum-chromite-based perovskite oxide.

**5.** The fuel cell according to any one of claim 1 to claim 4 further comprising:

a flat support substrate including an internal flow channel (11) for passing of fuel gas.


**Patentansprüche**

**1.** Brennstoffzelle (100), umfassend:

einen porösen Körper (10), der Ni-Partikel, Keramikpartikel und Poren umfasst;
eine aktive Anodenschicht (31), die auf dem porösen Körper (10) ausgebildet ist;
eine Kathode (33);
eine Festelektrolytschicht (32), die zwischen der aktiven Anodenschicht (31) und der Kathode (33) ausgebildet ist;
einen dichten Zwischenverbinder (20), der auf dem porösen Körper (10) ausgebildet und mit der aktiven Anodenschicht (31) elektrisch verbunden ist;
wobei der poröse Körper (10) und der Zwischenverbinder (20) gleichzeitig gebrannt werden;
wobei der poröse Körper (10) einen an eine Grenzfläche (P) mit dem Zwischenverbinder angrenzenden Kontaktbereich (101) umfasst, worin der Kontaktbereich mit dem Zwischenverbinder verbunden ist,
**dadurch gekennzeichnet, dass**
wenn der poröse Körper (10) einer reduzierenden Atmosphäre ausgesetzt ist, ein Volumenverhältnis der Poren zu einem Gesamtvolumen der Ni-Partikel, der Keramikpartikel und der Poren größer als oder gleich 14 Vol.-% und geringer als oder gleich 55 Vol.-% in dem Kontaktbereich ist, ein Volumenverhältnis der Ni-Partikel zu dem Gesamtvolumen größer als oder gleich 15 Vol.-% und geringer als oder gleich 50 Vol.-% in dem Kontaktbereich ist, und ein Volumenverhältnis der Ni-Partikel zu einem Summenvolumen eines Volumens der Keramikpartikel und eines Volumens der Ni-Partikel geringer als oder gleich 82,5 Vol.-% in dem Kontaktbereich ist, wobei das Volumenverhältnis der Poren zum Gesamtvolumen, das Volumenverhältnis der Ni-Partikel zum Gesamtvolumen und das Volumenverhältnis der Ni-Partikel zum Summenvolumen auf Basis einer Kontaktierungslänge von jedem der Ni-Partikel, der Keramikpartikel und der Poren mit dem Zwischenverbinder (20) in der Grenzfläche (P) zwischen dem porösen Körper (10) und dem Zwischenverbinder (20) berechnet werden.

**2.** Brennstoffzelle gemäß Anspruch 1, worin
wenn der poröse Körper einer reduzierenden Atmosphäre ausgesetzt ist, eine durchschnittliche Kontaktierungslänge der Ni-Partikel mit dem Zwischenverbinder (20) größer als oder gleich 0,51 Mikron und geringer als oder gleich 3,1 Mikron ist.

**3.** Brennstoffzelle gemäß Anspruch 1 oder Anspruch 2, worin
wenn der poröse Körper (10) einer reduzierenden Atmosphäre ausgesetzt ist, eine durchschnittliche Kontaktierungslänge der Keramikpartikel mit dem Zwischenverbinder (20) größer als oder gleich 0,49 Mikron und geringer als oder gleich 3,2 Mikron ist.

**4.** Brennstoffzelle gemäß einem der Ansprüche 1 bis 3, worin der Zwischenverbinder (20) durch ein Lanthan-Chromit-basiertes Perowskit-Oxid konfiguriert ist.

**5.** Brennstoffzelle gemäß einem der Ansprüche 1 bis 4, ferner umfassend:

ein flaches Trägersubstrat, das einen inneren Strömungskanal (11) zum Hindurchtreten von Brenngas umfasst.

**Revendications**

1. Pile à combustible (100) comprenant :

   un corps poreux (10) comprenant des particules de Ni, des particules de céramique et des pores ;
   une couche active d'anode (31) formée sur le corps poreux (10) ;
   une cathode (33) ;
   une couche d'électrolyte solide (32) disposée entre la couche active d'anode (31) et la cathode (33) ;
   une interconnexion dense (20) formée sur le corps poreux (10), et connectée électriquement à la couche active d'anode (31) ;
   le corps poreux (10) et l'interconnexion (20) étant cuites conjointement,
   le corps poreux (10) comprenant une région de contact (101) adjacente à une interface (P) avec l'interconnexion (20), la région de contact étant connectée à l'interconnexion
   **caractérisée en ce que**

   lorsque le corps poreux (10) est exposé à une atmosphère réductrice, un rapport volumique entre les pores et un volume total des particules de Ni, des particules de céramique et des pores étant supérieur ou égal à 14 % en volume et inférieur ou égal à 55 % en volume dans la région de contact, un rapport volumique entre les particules de Ni et le volume total étant supérieur ou égal à 15 % en volume et inférieur ou égal à 50 % en volume dans la région de contact, et un rapport volumique entre les particules de Ni et un volume additionné d'un volume des particules de céramique et d'un volume des particules de Ni étant inférieur ou égal à 82,5 % en volume dans la région de contact, le rapport volumique entre les pores et le volume total, le rapport volumique entre les particules de Ni et le volume total et le rapport volumique entre les particules de Ni et le volume additionné étant calculés sur la base d'une longueur de contact de chacune des particules de Ni, des particules de céramique et des pores avec l'interconnexion (20) dans l'interface (P) entre le corps poreux (10) et l'interconnexion (20).

2. Pile à combustible selon la revendication 1, dans laquelle
   lorsque le corps poreux est exposé à une atmosphère réductrice, une longueur moyenne de contact des particules de Ni avec l'interconnexion (20) est supérieure ou égale à 0,51 micron et inférieure ou égale à 3,1 microns.

3. Pile à combustible selon la revendication 1 ou la revendication 2, dans laquelle
   lorsque le corps poreux (10) est exposé à une atmosphère réductrice, une longueur moyenne de contact des particules de céramique avec l'interconnexion (20) est supérieure ou égale à 0,49 micron et inférieure ou égale à 3,2 micron.

4. Pile à combustible selon l'une quelconque des revendications 1 à 3, dans laquelle
   l'interconnexion (20) est configurée par un oxyde de pérovskite à base de lanthane et de chromite.

5. Pile à combustible selon l'une quelconque des revendications 1 à 4 comprenant en outre :

   un substrat de support plat comprenant un canal d'écoulement interne (11) pour faire passer un gaz combustible.

Fig. 1

20

P

Ni

Ceramic

Pore

10

101

Fig. 2

Fig. 3

A : Ni
B : Ceramic
C : Pore

Fig. 4

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1995225 A
- US 20120107716 A
- JP 2007250325 A
- JP 2007200761 A
- JP 2004253376 A

**Non-patent literature cited in the description**

- **NOBUYASU MIZUTANI ; YOSHIHARU OZAKI ; TOSHIO KIMURA ; TAKASHI YAMAGUCHI.** Ceramic Processing. Gihodo Shuppan Co., Ltd, 25 March 1985, 190-201
- **OYAMA TAKESHI.** *Adherence test using vertical pull instrument with stud pin'' The Surface Finishing,* 2007, vol. 58, 292